Europäisches Patentamt

(19) European Patent Office

Office européen des brevets

(11) EP 0 745 938 A1

(12) EUROPEAN PATENT APPLICATION

(43) Date of publication:
04.12.1996 Bulletin 1996/49

(51) Int. Cl.$^6$: G06F 12/02

(21) Application number: 96108651.9

(22) Date of filing: 30.05.1996

(84) Designated Contracting States:
DE FR GB

(30) Priority: 31.05.1995 JP 133969/95

(71) Applicant: NEC CORPORATION
Tokyo (JP)

(72) Inventor: Nakajima, Takashi,
c/o NEC Corporation
Tokyo (JP)

(74) Representative: Baronetzky, Klaus, Dipl.-Ing. et al
Patentanwälte
Dipl.-Ing. R. Splanemann, Dr. B. Reitzner, Dipl.-
Ing. K. Baronetzky
Tal 13
80331 München (DE)

(54) **Main storage unit having operating system resource region**

(57) In a main storage unit including an operating system (OS) resource region (11) and a user region (12), a plurality of memory pools (116) each having a first memory pool header (1161), a second memory pool header (1162), a plurality of memory block management region ($1163_1{'}$~$1163_n{'}$) and a plurality of memory bodies (1163b), the first and second memory pool headers and the memory block management regions are located in the OS resource region, and the memory bodies are located in the user region.

Fig. 4A

**Description**

BACKGROUND OF THE INVENTION

Field of the Invention

The present invention relates to a main storage unit having an operating system (OS) function for a microprocessor, and particularly, to a memory management system of the main storage unit.

Description of the Related Art

In a microprocessor system, a random access memory (RAM) as a main storage unit is indispensible to store programs and data. Particularly, in a single chip microprocessor, and as a result, the capacity of the main storage unit is limited.

A prior art main storage unit for a microprocessor is divided into an OS resource region and a user region which users freely use.

In one management system for the main storage unit, the number of bits of pointers (headers) is as large as possible so that the OS resource region can be located in any area of the main storage unit. For example, in a real time operating system of a 32-bit microprocessor where the capacity of the main storage unit is 4 Gbytes, if the number of bits of pointers is 32 bits, the OS resource region can be located in the whole of the main storage unit, and therefore, all of the memory blocks of the OS resource region can be increased. In other words, there is no limit on the OS resource region within the main storage unit.

In the management system for the main storage unit, however, when the number of resources is increased in the OS resource region, the total number of bits of pointers is also increased in proportion to the number of resources, thus substantially reducing the capacity of the main storage unit.

In another management system for the main storage unit, in order to substantially increase the capacity of the main storage unit, the number of bits of pointers is reduced. In this case, however, it is impossible to prepare a large capacity of memory pools in the main storage unit, and also, the number of resources in the OS resource region is limited, which deteriorates the function of the operating system. This will be explained later in detail.

SUMMARY OF THE INVENTION

It is an object of the present invention to provide a main storage unit for a microprocessor system capable of having a large capacity of memory pools and which can improve the function of the operating system.

According to the present invention, in a main storage unit including an OS resource region and a user region, a plurality of memory pools each having a first memory pool header, a second memory pool header, a plurality of memory block management regions and a plurality of memory bodies, the first and second memory pool headers and the memory block management regions are located in the OS resource region, and the memory bodies are located in the user region. That is, the memory bodies are moved from the OS resource region to the user region.

Also, the memory bodies are designated by full addresses of the main storage unit, so that the memory bodies can be located in any areas of the main storage unit.

BRIEF DESCRIPTION OF THE DRAWINGS

The present invention will be more clearly understood from the description as set forth below, as compared with the prior art, with reference to the accompanying drawings, wherein:

Fig. 1 is a diagram illustrating a prior art main storage unit;
Fig. 2 is a detailed diagram illustrating one memory pool of the main storage unit of Fig. 1;
Fig. 3 is a flowchart showing an operation of the main storage unit of Fig. 1;
Figs. 4A and 4B are diagrams illustrating an embodiment of the main storage unit according to the present invention;
Fig. 5 is a detailed diagram illustrating one memory pool of the main storage unit of Fig. 4; and
Fig. 6 is a flowchart showing an operation of the main storage unit of Fig. 4.

DESCRIPTION OF THE PREFERRED EMBODIMENT

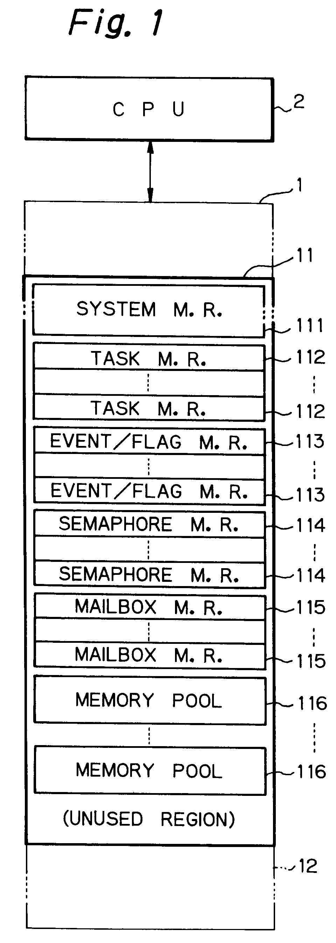

Before the description of the preferred embodiment, a prior art memory storage unit will be explained with reference to Figs. 1, 2 and 3.

In Fig. 1, which illustrates a prior art main storage unit for a 24-bit microprocessor, a 16 Mbyte main storage unit 1 is connectd to a central process unit (CPU) 2. In this case, if the number of bits of pointers (header) is 3 byte (24 bits), an OS resource region can be located in any area of the main sotage unit 1. In Fig. 1, however, the number of bits of pointers (headers) is 2 bytes (16 bits), to save 1 byte per one pointer.

The main storage unit 1 is divided into an OS resource region 11 and a user region 12 which users can freely use. In this case, the OS resource region 11 is a range of 64 kbytes from an address having fixed base address designated by users.

Also, the OS resource region 11 is divided into a system management region 111, resource management regions such as task management regions 112, event/flag management regions 113, semaphore management regions 114 and mailbox management regions 115, and memory pools 116 each including a queue of memory blocks.

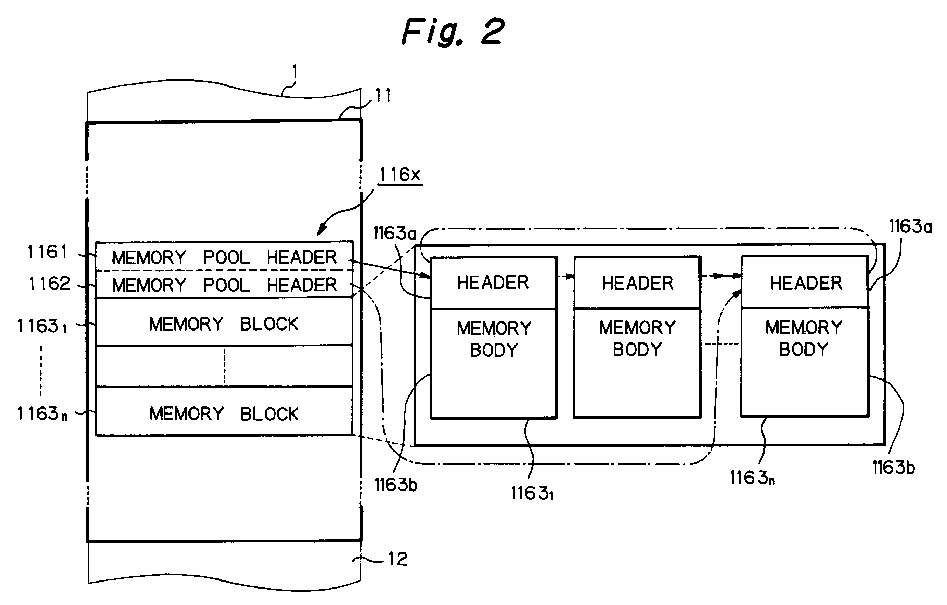

The details of one memory pool 116x of Fig. 1 are explained next with reference to Fig. 2. The memory pool 116x includes a 2-byte memory pool header (pointer) 1161 for indicating a first memory block $1163_1$ of the queue and a 2-byte memory pool header (pointer) 1162 for indicating a last memory block $1163_n$ of the queue. In this case, the queue is comprised of a simple linked list (sequence) of the memory blocks $1163_1$ to $1163_n$. Each of the memory blocks $1163_1$ to $1163_n$ is formed by a 2-byte header (pointer) 1163a for indicating the next memory block and a memory body 1163b which actually can store data.

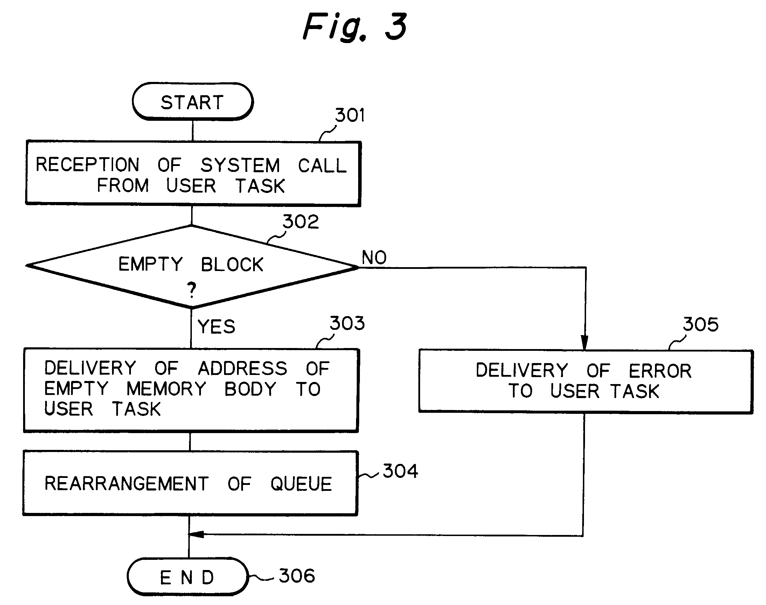

The operation of the OS management resource region 11 of Fig. 1 is explained next with reference to Fig. 3.

First, at step 301, the OS management resource region 11 receives a system call from an application task managed by one of the task management regions 112.

Next, at step 302, the OS management resource region 11 searches an empty memory block with reference to the contents of the memory pool headers 1161 and 1162. As a result, if there is an empty memory block, the control proceeds to steps 303 and 304. Otherwise, the control proceeds to step 305.

At step 303, the OS resource region 11 delivers a 2-byte address of the memory body of the empty memory block to the application task. Then, at step 304, the queue is rearranged by removing the memory block delievered to the application task.

On the other hand, at step 305, the OS resource region 11 delivers an error signal for indicating that there is no empty memory block to the application task.

In the prior art main storage unit 1 of Fig. 1, if the capacity of each of the memory bodies 1163b is 4 kbytes and the number of the memory blocks $1163_1$ to $1163_n$ is 20, the capacity of the memory 116x is

$$(4 \text{ kbytes} + 2 \text{ bytes}) \times 20 + 2 \times 2 \text{ bytes} = 80 \text{ kbytes} + 44 \text{ bytes}$$

Therefore, it is impossible to accommodate the memory pool 116x in the 64 kbyte OS resource region 11. Thus, it is impossible to prepare a large capacity of memory pools.

Also, since the memory bodies 1163b are located in the OS resource region 11, the number of resources in the OS resource region 11 is limited, which deteriorates the function of the operating system.

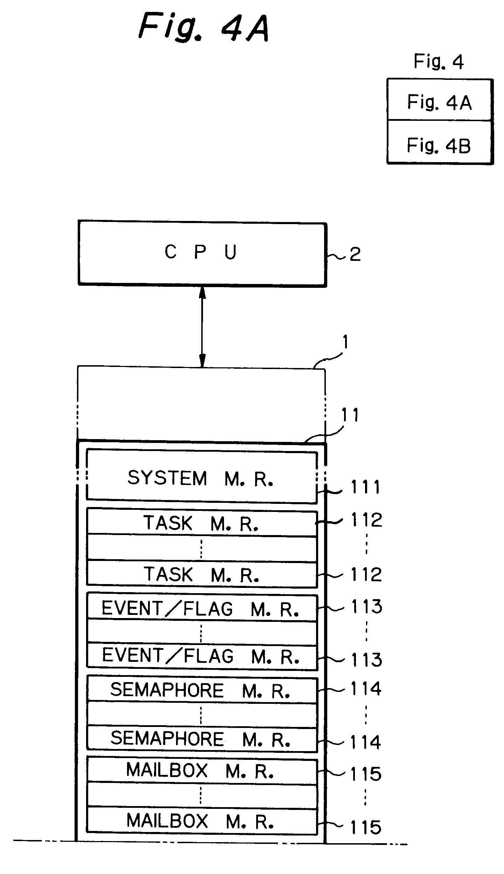

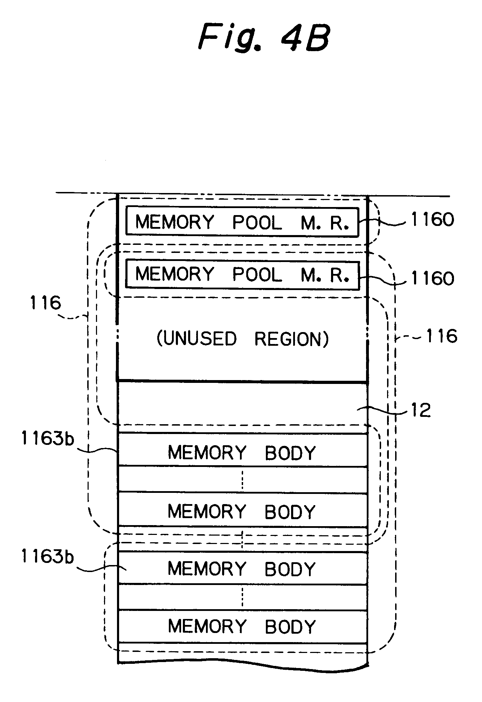

In Figs. 4A and 4B, which illustrate an embodiment of the main storage unit according to the present invention, each of the memory pools 116 is located in both the OS resource region 11 and the user region 12. That is, memory pool management regions 1160 of the memory pools 116 are located in the OS resource region 11, and the memory bodies 1163b of the memory pools 116 are located in the user region 12.

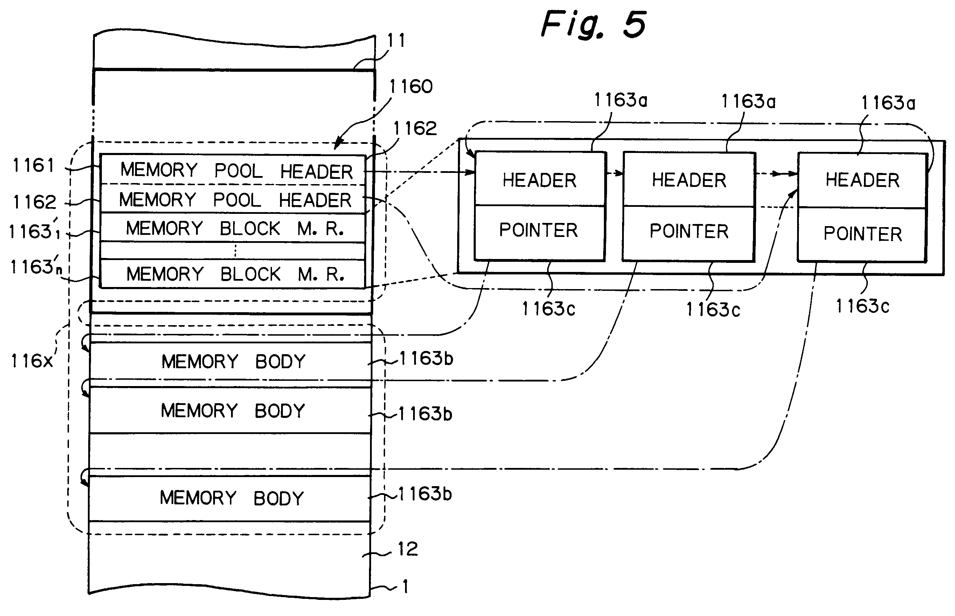

The details of one memory pool 116x of Fig. 4 are explained next with reference to Fig. 5.

In the OS resource region 11, memory block management regions $1163_1$' to $1163_n$' are provided instead of the memory blocks $1161_1$ to $1163_n$ of Fig. 2. Each of the memory block management regions $1163_1$' to $1163_n$' is formed by the 2-byte header 1163a for indicating the next memory block management region and a 3-byte pointer 1163c for storing a full address of one of the memory bodies 1163b. Thus, the memory bodies 1163b can be located in any areas of the main storage unit 1.

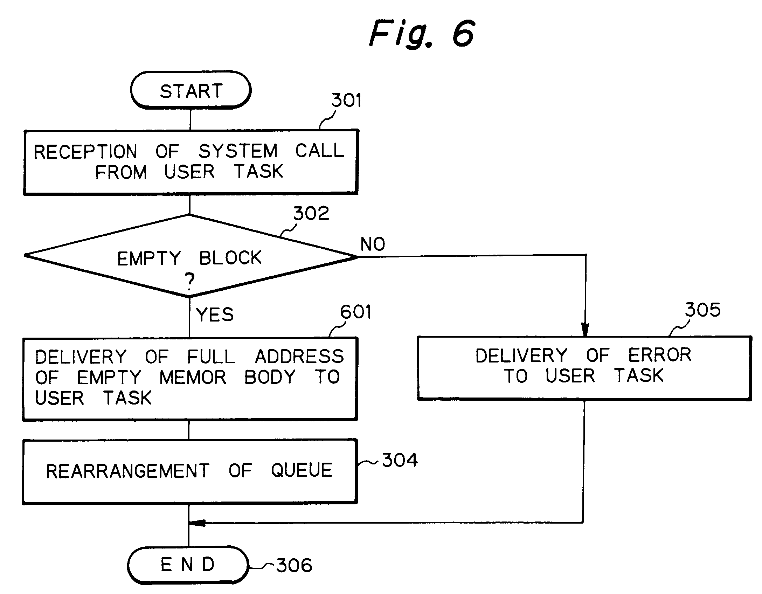

The operation of the OS management resource region 11 of Figs. 4A and 4B is explained next with reference to Fig. 6. In Fig. 6, step 601 is provided instead of step 303 of Fig. 3. That is, at step 601, the OS resource region 11 delivers a 3-byte address of the memory body of the empty memory block to the application task in accordance with the content of the pointer 1163c of the empty memory block.

In the main storage unit 1 of Fig.4, if the capacity of each of the memory bodies 1163b is 4 kbytes and the number of the memory blocks is 20, the capacity of the memory 116x is

$$(4 \text{ kbytes} + 2 \text{ bytes} + 3 \text{ bytes}) \times 20 + 2 \times 2 \text{ bytes} = 80 \text{ kbytes} + 104 \text{ bytes}$$

In this case, the 104 bytes are allocated to the OS resource region 11, and the 80 kbytes are allocated to the user region 12. Therefore, it is easily possible to accommodate the 104 bytes of the memory pool 116x in the 64 kbyte OS resource region 11. Thus, it is possible to prepare a large capacity of memory pools.

Also, since the memory bodies 1163b are located in the user region 12, the number of resources in the OS resource region 11 is not limited, which improves the function of the operating system.

Next, assume that the main storage unit 1 of Fig. 4 is used for a 16-bit single chip microprocessor, and the capacity of the main storage unit 1 is 64 kbytes. In this case, the number of bits of pointers (headers) is 1 byte (8 bits), which saves 2 bytes per one pointer. Also, in the main storage unit 1 of Fig.4, if the capacity of each of the memory bodies 1163b is 20 bytes and the number of the memory blocks is 20, the capacity of the memory 116x is

$$(20 \text{ bytes} + 1 \text{ bytes} + 3 \text{ bytes}) \times 20 + 2 \times 1 \text{ bytes} = 400 \text{ bytes} + 82 \text{ bytes}$$

In this case, the 82 bytes are allocated to the OS resource region 11, and the 400 bytes are allocated to the user region 12. Therefore, it is easily possible to accommodate the 82 bytes of the memory pool 116x in the 256 kbyte OS resource region 11. Thus, it is possible to prepare a large capacity of memory pools.

Further, since the memory bodies 1163b are located in the user region 12, the number of resources in the OS resource region 11 is not limited, which improves the function of the operating system.

As explained hereinabove, according to the present invention, since the memory bodies of the memory blocks are moved from the OS resource region to the user region and the memory bodies are designated by full addresses of the main storage unit, the memory bodies can be located in any areas of the main storage unit, thus increasing the capacity of the memory pools. Also, since the OS resource regions are not limited, users can use a large number of OS resources.

## Claims

1. A main storage unit including an operating system (OS) resource region (11) and a user region (12), comprising:

   a plurality of memory bodies (1163b) located in said user region and each designated by a full address capable of accessing any areas of said main storage unit, said memory bodies forming a queue;
   a plurality of pointers (1163c) located in said OS resource region and each storing the full address of said memory bodies;
   a plurality of headers (1163a) located in said OS resource region and each provided for one of said pointers and for indicating a next one of said memory bodies in said queue;
   a first memory pool header (1161), located in said OS resource region, for indicating a first one of said memory bodies in said queue; and
   a second memory pool header (1162), located in said OS resource region, for indicating a last one of said memory bodies in said queue.

2. The main storage unit as set for forth in claim 1, wherein said OS resource region comprises:

   means for receiving a system call from an application task;
   means for determining whether or not there is an empty memory body in said memory bodies in said queue in accordance with contents said memory pool headers, after said system call is received; and
   means for delivering a full address of said empty memory body to said application task in accordance with contents of said headers and said pointers, after determining existence of said empty memory body.

3. The main storage unit as set forth in claim 2, wherein said OS resource region further comprises:

   means for rearranging said queue by removing said empty memory body after said empty memory body is deliverd to said application task; and
   means for delivering an error signal to said application task, after it is determined that there is no empty memory body.

4. The main storage unit as set forth in claim 1, wherein a capacity of each of said headers and said first and second memory headers is smaller than the number of bits of said full address.

# Fig. 1

Fig. 2

# Fig. 3

```
                    ┌─────────────┐
                    │    START    │
                    └─────────────┘
                           │
                           │         ╱ 301
              ┌────────────────────────┐
              │  RECEPTION  OF  SYSTEM  CALL  │
              │     FROM  USER  TASK    │
              └────────────────────────┘
                           │
                           │          ╱ 302
                      ╱─────────────╲
                    ╱                 ╲      NO
                  ╱   EMPTY  BLOCK      ╲──────────────┐
                  ╲         ?          ╱               │
                    ╲                 ╱                │
                      ╲─────────────╱                  │
                           │ YES    ╱ 303              │
              ┌────────────────────────┐    ┌──────────────────────┐
              │  DELIVERY  OF  ADDRESS  OF │    │  DELIVERY  OF  ERROR  │   ╱ 305
              │  EMPTY  MEMORY  BODY  TO   │    │     TO  USER  TASK     │
              │  USER  TASK               │    └──────────────────────┘
              └────────────────────────┘               │
                           │                           │
              ┌────────────────────────┐   ~ 304       │
              │  REARRANGEMENT  OF  QUEUE │               │
              └────────────────────────┘               │
                           │◄──────────────────────────┘
                    ┌─────────────┐
                    │    E N D    │─ 306
                    └─────────────┘
```

EP 0 745 938 A1

# Fig. 4A

Fig. 4

| Fig. 4A |
|---------|
| Fig. 4B |

```
        CPU                  ~2


         ↕


                             ~1


                             ~11

   SYSTEM  M. R.             ~111

   TASK  M. R.              ~112
        ⋮
   TASK  M. R.              ~112

   EVENT/FLAG  M. R.        ~113
        ⋮
   EVENT/FLAG  M. R.        ~113

   SEMAPHORE  M. R.         ~114
        ⋮
   SEMAPHORE  M. R.         ~114

   MAILBOX  M. R.           ~115
        ⋮
   MAILBOX  M. R.           ~115
```

# Fig. 4B

MEMORY POOL M. R. ~1160

MEMORY POOL M. R. ~1160

116

(UNUSED REGION) ~116

~12

1163b

MEMORY BODY

MEMORY BODY

1163b

MEMORY BODY

MEMORY BODY

Fig. 5

EP 0 745 938 A1

# Fig. 6

START

RECEPTION OF SYSTEM CALL
FROM USER TASK — 301

EMPTY BLOCK
? — 302

NO →

YES ↓

DELIVERY OF FULL ADDRESS
OF EMPTY MEMOR BODY TO
USER TASK — 601

DELIVERY OF ERROR
TO USER TASK — 305

REARRANGEMENT OF QUEUE — 304

END — 306

EP 0 745 938 A1

EP 0 745 938 A1

| | European Patent Office | EUROPEAN SEARCH REPORT | Application Number EP 96 10 8651 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | IBM TECHNICAL DISCLOSURE BULLETIN, vol. 33, no. 8, 1 January 1991, pages 474-479, XP000109329 "LINKED LIST SEARCH TABLE ARRAY FOR FREE STORAGE BLOCKS" | 1-4 | G06F12/02 |
| A | IBM TECHNICAL DISCLOSURE BULLETIN, vol. 23, no. 6, November 1980, NEW YORK, US, pages 2411-2412, XP002014101 ANONYMOUS: "Storage Algorithm for Chains of Control Block Pools. November 1980." | 1-3 | |
| A | ELEKTRONIK, vol. 31, no. 7, April 1982, MUNCHEN DE, pages 86-92, XP002014102 "Architektonische Merkmale von Einchip-Computern" * page 89, paragraph 4.3.3 * | 1,4 | |
| | | | TECHNICAL FIELDS SEARCHED (Int.Cl.6) |
| | | | G06F |

The present search report has been drawn up for all claims

| Place of search | Date of completion of the search | Examiner |
|---|---|---|
| THE HAGUE | 24 September 1996 | Nielsen, O |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

12